# EUROPEAN PATENT APPLICATION

(11) **EP 1 325 825 A2**
(43) Date of publication of application: **09.07.2003**
(21) Application number: 02380125.1
(22) Date of filing: 12.06.2002
(51) Int. Cl.: B60J 7/10

(54) **Device for the attachment and tightening of canvases on transportation vehicles**

(30) Priority: 04.01.2002 ES 200200015 U
(71) Applicant: Sos Navarro, Carmen, 48011 Bilbao (ES)
(72) Inventor: Sos Navarro, Carmen, 48011 Bilbao (ES)
(74) Representative: Maldonado Jordan, Julia

(57) **Abstract**

It consists of a mobile rod (5), parallel to the edge of the canvas, on which a plurality of straps (7) form integral part, and which are finished off into hooks, corresponding to rings (9) attached on the canvas (4), said mobile rod (5) playing inside recesses (10) of the crosspieces (3) of the structure of the vehicle and being activated by means of various double-effect hydraulic and pneumatic pistons (12), appropriately distributed along the chassis of the vehicle, in such a manner, that when said pistons (12) retract, they pull on the mobile rod (5), and through the strap (7), of the canvas (4), for a perfect tightening of the same.

## Description

### OBJECT OF THE INVENTION

The present invention refers to a device that has been specially conceived for attaching and tightening canvases that generally enclose the freight box structure of a transportation vehicle.

The object of the invention is to obtain a device that permits a greater tensile stress and greater rapidity and ease of handling during the tightening of the canvas.

### BACKGROUND OF THE INVENTION

As is already known, the use of canvases that constitute, either the lateral and upper enclosing means of its freight box structure or else affect only one of these elements, is frequently to be found in the field of transportation vehicles. Said canvases, have to be perfectly attached and tightened in closed position in order to ensure its stability during transport. Special mention must be made to the so-called "fridgecanvas" vehicles, with canvases on one or both sides, homologated as refrigerators or isotherms, which permit a polyvalent use, for normal and cold transport, allowing the lateral loading/unloading of the freight.

Conventionally, and in order to attach these canvases, these are equipped, in correspondence with their lower edge, with a series of sufficiently robust belts or straps, which, appropriately sown on the canvas, are attached by any means to a rotational rod, on which they are intended to be wound up when said rod is made to perform a rotating movement, either manually or with any appropriate motorized element, in such a manner, that the winding of the straps on the rod, causes a shortening of the same, with the consequent tightening of the canvas.

Its manual actuation is laborious, achieving a tensile stress that leaves much to be desired, and for the mechanical activation, since it is necessary to supply a rotating movement to said rod, electrical motors are sporadically used, which, in addition to creating implantation problems, make the device significantly more expensive, without obtaining either in this type of activation optimum results from the tensile stress point of view.

### DESCRIPTION OF THE INVENTION

The attachment and tightening device proposed by the invention solves in a totally satisfactory manner, the previously indicated problem, offering moreover, a series of additional advantages that shall be made evident throughout the present description.

For this, and more specifically, said device is based on a totally different functional philosophy, in such a way, that the tow-rod of the straps, instead of rotating for winding said straps on the same, moves lineally, specifically in transversal direction to its own axis.

This signifies the possibility of using any type of automatic activating element, as for example a pneumatic double-effect piston, using for this, the pneumatic circuit provided on these vehicles, generally semitrailers. However, this is no obstacle for the use of any other type of activating means, as for example, lead screws, electric and lineal activators, cylinders with racks, electromagnetic activators, etc., even a manual system based on a crank-pinion-rack.

In accordance with another of the characteristics of the invention, additionally, it has been provided that said straps, instead of being attached to the canvas, they are attached to the tow-rod, said straps finishing off in hooks that couple into rings forming part of the actual canvas.

Said tow-rod shall preferably play in the centre of the lateral crosspieces of the platform of the vehicle, for which, and due to the fact that the crosspieces are of different sizes depending on whether they are to be found at the beginning or at the end of the platform, specifically being narrower at the front, crosspieces are in some cases completely sectioned, by placing two flat bars, one on top and the other one underneath, both flat bars being attached by welding; and on the widest crosspieces, recesses of appropriate depth on the top part of the same are made.

Depending on the length of the tow-rod, an appropriate number of double-effect pistons shall be used, or of the selected activation elements, uniformly distributed, which shall be controlled "in situ" or at a distance, depending on the characteristics of the vehicle.

### DESCRIPTION OF THE DRAWINGS

In order to complement this description, and with the object of aiding to a better understanding of the characteristics of the invention, in accordance with a preferred practical exemplary embodiment of the same, a set of drawings is enclosed, forming integral part of said description, in which set of drawings, with illustrative and non limitative character, the following has been represented:
Figure 1 represents a schematical, partial and lower plan view of the freight box structure of a vehicle equipped with the device for the attachment and tightening of its canvas that constitutes the object of the present invention. Said canvas appearing disassembled and pulled down for greater clarity of the drawing.
Figure 2 shows a cross-sectional detail of the assembly represented in the previous figure, in accordance with the cutting-line A-B of said figure.

### PREFERRED EMBODIMENT OF THE INVENTION

In the described figures, the freight platform of the transportation vehicle has been referenced with (1), stiffened by means of longitudinal spars (2) and crosspieces (3) appropriately distributed, whilst the lateral enclosing canvas of the vehicle, also seen partially, has been referenced with (4) and appears in coplanar arrangement of the actual freight platform (1) for greater clarity of the drawing, being evident that under normal service situation, said canvas (4) shall adapt to the external face of the spar (2), said spar being likewise external, in perpendicular arrangement to the freight platform (1).

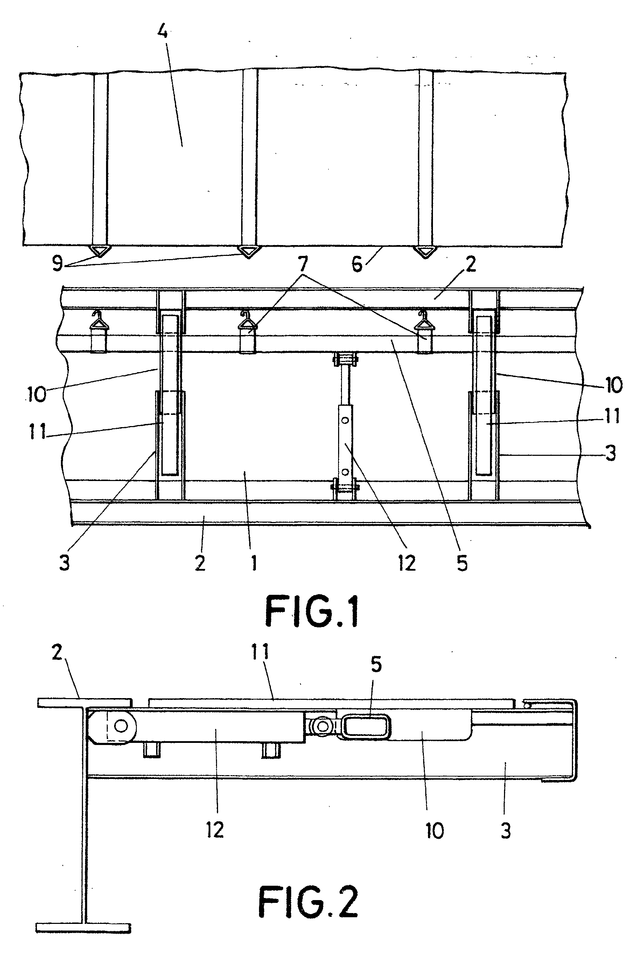

Therefore, the device of the invention is made up of a mobile rod (5), parallel to the spars (2), that is to say, parallel to the lower edge (6) of the canvas (4), that plays under the freight platform (1) within the space comprised between the spars (2) and with which a plurality of straps (7) form integral part, said straps (7) being perpendicular to said rod (5) and finished off at their free end into respective hooks (8), through which they are capable of interlocking into rings (9) attached to the edge (6) of the canvas (4) or established in the centre of the actual canvas, as is shown in figure 1.

Since the crosspieces (3) of the structure corresponding to the freight platform of the vehicle, in principle, interfere with the tow-rod (5), it has been provided, that said crosspieces (3), as can be perfectly observed in the figures, are affected by a recessing (10), with a length appropriate to the transversal displacement planned for the rod (5), said recessing closing by means of robust flat bar (11), conveniently attached at its ends to the actual crosspiece (3), to reestablish in the same the initial structural robustness, these flat bars (11) also acting, when the recesses (10) are closed at their upper part, as retention means of the rod (5), said flat bars (11), by allowing the transversal movement of the same, lock it in vertical direction, each crosspiece (3) being capable of being aided by one single flat bar, when crosspieces are of considerable width, or by two flat bars in the case of the narrowest crosspieces, which must be sectioned in their totality.

The tow-rod (5), as has already been indicated, is intended to pull on straps (7), for pulling, in turn, on the canvas (4) and causing the attachment and tightening of the same, for which, between said rod (5) and the exterior spar (2), a plurality of double-effect pistons (12) are established, either hydraulic or pneumatic, uniformly distributed and controlled from any appropriate location, in such a manner, that the extension of said pistons (12) signifies the movement of the rod (5) in the direction of the arrows represented in figure (1) and the consequent pulling on the straps (7) for the tightening of the canvas, whilst the shortening of said pistons (12) signifies the loosening of the straps (7) and the possibility of the disassembly of the same as regards the canvas (4).

However, and as has been previously indicated, said double-effect pistons (12) may be replaced by any other activating mechanism considered appropriate.

A series of advantages are derived from the described structure, that may be mainly focused in the following aspects:
- Greater tensile stress
- Greater ease of handling
- Mechanical handling, though a manual handling is also feasible
- Ease of assembly
- Greater robustness in the system
- Rapidity of the tightening
- Lack of the need to carry out a pre-tightening of the canvas.
- Possibility of using elements available in the market, having a lower cost.

## Claims

1. Device for the attachment and tightening of canvases on transportation vehicles, of the type that use uniformly distributed straps, that relate the lower edge of the canvas with a tow-rod on said straps, **characterized in that** said rod is equipped with lineal displacement means, specifically, transversal displacement as regards the axis of the same, that causes an equally lineal pulling of the straps in the absence of the winding of the same over said rod.

2. Device for the attachment and tightening of canvases on transportation vehicles, according to claim 1, **characterized in that** the straps are immovably attached by one of their ends to the tow-rod and include at their other end, a hook through which they couple into rings advantageously forming integral part of the lower edge of the canvas.

3. Device for the attachment and tightening of canvases on transportation vehicles, according to the previous claims, **characterized in that** the tow-rod is established between two of the spars of the loading platform of the vehicle and cross the crosspieces of said structure, for which said crosspieces are affected by a recessing which length is in accordance to the magnitude of transversal movement provided for the rod, said recesses closing on their lower part by means of corresponding flat bars forming integral part by their ends on the actual crosspieces.

4. Device for the attachment and tightening of canvases on transportation vehicles according to the previous claims, **characterized in that**, between the external spar of the structure of the freight platform of the vehicle and the tow-rod, a plurality of activating elements are established, uniformly distributed, preferably made up of double-effect hydraulic and pneumatic pistons, optionally replaceable by any other means considered appropriate.
